# EUROPÄISCHE PATENTSCHRIFT

(11) **EP 1 089 294 B1**
(45) Veröffentlichungstag und Bekanntmachung des Hinweises auf die Patenterteilung: **20.10.2004**
(21) Anmeldenummer: 00118639.4
(22) Anmeldetag: 29.08.2000
(51) Int. Cl.: G21C 9/00, G21C 15/18

(54) **Vorrichtung zum Druckentlasten und zum passiven Nachspeisen von Kühlmittel in einem Druckbehälter**
Apparatus for pressure relief and passive introduction of coolant in a pressure vessel
Dispositif pour la réduction de la pression et pour l'introduction passive d'un fluide de refroidissement dans un récipient sous pression

(30) Priorität: 03.09.1999 DE 19942199
(43) Veröffentlichungstag der Anmeldung: 04.04.2001
(73) Patentinhaber: Forschungszentrum Jülich GmbH, 52425 Jülich (DE); SIET spa Società Informationi Esperienze Termoidrauliche, 29100 Piacenza (IT)
(72) Erfinder: von Lensa, Werner, Dr.-Phys., 52379 Langerwehe (DE); Jaegers, Hubert, Dipl.-Ing., 52428 Jülich (DE); Cattadori, Gustavo, Dipl.-Ing., 29012 Caorso (IT)
(74) Vertreter: Rox, Thomas Dr.

(56) Entgegenhaltungen:
- EP-A- 0 531 086
- GB-A- 2 260 917
- US-A- 4 057 465
- US-A- 4 322 267
- US-A- 4 457 889
- US-A- 5 108 695
- US-A- 5 120 494

## Beschreibung

Die vorliegende Erfindung betrifft eine Vorrichtung zum sicheren Druckentlasten und passiven Nachspeisen von Kühlmittel in Kernreaktoren oder anderen Hochdrucksystemen mit hohem Energiegehalt oder weiterer Energiefreisetzung, wie sie z. B. bei der Nachwärme von Kernkraftwerken aber z. T. auch bei konventionellen Kraftwerkskesseln gegeben ist. Derartige Systeme müssen bei gewissen Störfällen möglichst schnell druckentlastet werden, um z. B. beim Ausfall der Kühlung ein Kernschmelzen und in der Folge ein Hochdruckversagen der druckführenden Umschließung oder andere Schäden zu verhindern.

Bei mit Leichtwasser- oder Schwerwasser gekühlten und moderierten Kernreaktoren (LWR, HWR) ist die Druckentlastung über Sicherheitsventile durch das Ausdampfen des Kühlmittels bei Druckabsenkung mit einem kontinuierlichen Kühlmittelverlust verbunden. Diesem Effekt wird dadurch begegnet, daß große Kühlmittelmengen in den Druckhaltern von Druckwasserreaktoren (DWR) oder durch das große Volumen und die Bauhöhe des Reaktordruckbehälters (SWR) vorgehalten werden. Dadurch soll verhindert werden, daß der Reaktorkern bei Druckentlastung nicht mehr von Kühlmittel bedeckt ist und in Folge fehlender Kühlung wegen der anhaltenden Nachwärmeproduktion zusammenschmilzt (Kernschmelzunfall).

Diesem Szenario kann bei existierenden Reaktoren z. B. durch eine Notfallschutzmaßnahme (Accident Management) mit kontrolliertem Abblasen und gleichzeitiger Nachspeisung von Kühlmittel primär- und/oder sekundärseitig begegnet werden (Feed & Bleed). Dieser Eingriff in den Unfallablauf setzt jedoch aktive Maßnahmen beim Auslösen der Druckentlastung und/oder Nachspeisen von Kühlmittel über Pumpen voraus.

Bei fortschrittlicheren Reaktorkonzepten ist die z. T. auch passiv ausgelöste Druckentlastung fester Bestandteil des Sicherheitskonzeptes. Eine Nachspeisung des Kühlmediums erfolgt in der Regel aber erst nach erfolgter Drukkentlastung über sogenannte geodätische Flutbecken im Containment, welche oberhalb des Reaktorkerns angeordnet sind. Durch Rückschlagventile wird der Kühlmittelzutritt nur über die relative geringe Druckdifferenz erlaubt, die sich aus dem Höhenunterschied (max. ca. 10-20 m, d.h. nur ca. 0,1 - 0,2 Mpa als treibender Überdruck) ergibt. Außerdem ist es erforderlich, daß relativ große Querschnitte für die Druckentlastung freigelegt werden, um einen Gegendruck durch den entstehenden Dampf zu verhindern, welcher dem Eintreten des Kühlmittels entgegenwirkt.

In beiden Fällen ist das Einspeisen des Kühlmittels vom Druckentlastungsprozeß entkoppelt und verlangt entweder aktive Maßnahmen durch Betreiben von Pumpen, die von externer Energieversorgung abhängig sind, oder aber das Überführen des Gesamtsystems in einen quasi drucklosen Zustand, um separate Kühlvorgänge passiv auszulösen. Durch die Entkopplung dieser Vorgänge ist jedoch die Gefahr von Fehlfunktionen mit Freilegung und Schmelzen des Reaktorkerns gegeben.

Ein weiteres allgemeines Problem bei LWR besteht darin, daß das eingespeiste Kühlmittel in bestimmten Betriebszyklen Neutronengifte enthalten muß, damit der Kernspaltungsprozeß nach Einfahren der Absorberstäbe gestoppt bleibt und nicht durch eine Verdünnung des Kühlmittels mit nicht-boriertem Kühlmittel während der Notfallschutzmaßnahme erneut auflebt.

Das Auslösen des Druckentlastungsvorganges ist problematisch und kann wie beim Unfall am Three Miles Island (TMI) Reaktor in den USA zu Kernschäden führen, wenn die Gegenmaßnahmen unkoordiniert verlaufen oder die Druckentlastungsventile nicht mehr schließen.

Die Monofunktionalität von Sicherheitssystemen kann zu derartigen Fehlfunktionen führen und sollte durch sinnfällige Kopplung von Sicherheitsfunktionen überwunden werden.

Der auf hohem Druck und hoher Temperatur (250-350°C) befindliche Kühlkreislauf von wassergekühlten Kernreaktoren besitzt einen erheblichen Energieinhalt, welcher durch die Nachwärmeproduktion auch nach Abschalten des Reaktors noch weiter erhöht wird. Dieser Energieinhalt wird am Austritt der Druckentlastungsventile üblicherweise ungenutzt abgeblasen.

Die US 4,322,267, von der die vorliegende Erfindung ausgeht, offenbart eine Vorrichtung zum Abführen der Wärme aus einem Reaktordruckbehälter, wobei eine Pumpe zum Einspeisen von Kühlmittel mit Hilfe einer Turbine angetrieben wird, der wiederum Dampf aus dem Reaktordruckbehälter zugeführt wird. In der Leitung zwischen dem Reaktordruckbehälter und der Turbine ist ein Regelventil angeordnet, das mit Hilfe einer Speisewasserkontrolleinrichtung angesteuert wird.

Die US 4,457,889 offenbart ein System, mit dessen Hilfe Restwärme aus dem Sekundärkreislauf eines Kernreaktors abgeführt werden kann. Dazu ist eine Turbine vorgesehen, die mit Dampf aus dem Sekundärkreislauf versorgt wird und eine Pumpe antreibt, die wiederum Kühlmittel in den Sekundärkreislauf einspeist. Der Turbine vorgeschaltet ist ein Kontrollventil, das aktiv angesteuert werden muss, damit das System seinen Betrieb aufnimmt.

Aus der US 5,108,695 ist ebenfalls ein Notsystem zur Versorgung des Sekundärkreislaufes mit Speisewasser bekannt. Auch hier wird eine Turbine mit Dampf aus dem Sekundärkreislauf versorgt, wobei die Turbine eine Speisewasserpumpe antreibt. In der Versorgungsleitung der Turbine ist ein Steuerventil angeordnet, das zum Start des Systems aktiv geöffnet werden muss.

Die EP 0 531 086 A1 beschreibt ein Kühlsystem für eine Isolierung eines Reaktorkerns, das sich aus mehreren, voneinander unabhängigen Systemen zusammensetzt. Unter anderem ist ein "Reactor core isolation cooling" (RCIC)-System beschrieben, dessen Aufgabe es ist, für einen genügenden Wasserstand in dem Druckbehälter des Reaktors zu sorgen. Dazu wird bei Bedarf mittels einer Pumpe Wasser aus einem Vorratsbecken zusätzlich in die herkömmliche Wasserzufuhrleitung des Druckbehälters eingespeist. Die Pumpe wird durch eine Turbine angetrieben, die mit Dampf betrieben wird, der aus der herkömmlichen Wasserabfuhrleitung des Druckbehälters abgezweigt wird. Die Anschlüsse an die Wasserzu- und Abführleitung werden durch steuerbare Ventile verschlossen, die durch eine elektrische Kontrolleinheit angesteuert werden.

Ein weiteres System dient dem Druckentlasten des Druckbehälters. Dieses System besteht aus einem an die herkömmliche Wasserabführleitung angeschlossenen Druckentlastungsventil, das ebenfalls über die elektronische Kontrolleinheit angesteuert wird. Der über das Druckentlastungsventil abgeführte überschüssige Wasserdampf wird in den den Druckbehälter umgebenden Behälter geleitet.

Die US 4,057,465 offenbart ein System zum Abführen der Restwärme aus einem gasgekühlten Kernreaktor. Dabei wird das Reaktorkühlmittel in einer Turbine expandiert, in einem Wärmetauscher abgekühlt und mit Hilfe eines Kompressors wieder komprimiert, bevor es schließlich zurück in den Reaktor gelangt. Die Turbine treibt dabei sowohl den Kompressor als auch eine Pumpe an, die ein zweites Kühlmittel durch den Wärmetauscher pumpt, um das Reaktorkühlmittel abzukühlen. Somit wird durch die D5 auch keine Vorrichtung offenbart, die dem Druckentlasten und dem Nachspeisen von Kühlmitteln dient. Außerdem ist durch die D5 nicht offenbart, dass das dort beschriebenen System selbsttätig startet.

Der Erfindung liegt daher das technische Problem zugrunde, das Druckentlasten und passive Nachspeisen von Kühlmittel in einen Druckbehälter gegenüber dem Stand der Technik zu verbessern.

Das zuvor aufgezeigte technische Problem ist erfindungsgemäß durch eine Vorrichtung zum Druckentlasten und zum passiven Nachspeisen von Kühlmittel in einen Druckbehälter gemäß Anspruch 1 gelöst. Die Vorrichtung weist einen Antrieb auf, der mit dem Druckbehälter über eine Leitung verbunden ist. Weiterhin ist mindestens ein Kühlmittelreservoir über eine weitere Leitung mit dem Druckbehälter verbunden. Der Antrieb ist mit einer Pumpe verbunden, die in der Leitung zwischen dem Kühlmittelreservoir und dem Druckbehälter angeordnet ist. Während des Druckentlastens strömt dampfförmiges Kühlmittel aus dem Druckbehälter aus und treibt den Antrieb an. Dieses führt dazu, daß die Pumpe aus dem Kühlmittelreservoir Kühlmittel ansaugt und dem Druckbehälter zuführt. Die vorgeschlagene Vorrichtung erlaubt daher die Druckentlastung und stellt gleichzeitig durch Nutzung des Energiegehaltes des abströmenden Dampfes eine Rückförderung des Kühlmittels sicher.

Gegenstand der Erfindung ist es also, die bei der Druckentlastung freigesetzte Energie für die Rückförderung von Kühlmittel zu nutzen. Dies geschieht durch Vorrichtungen, die integraler Teil des Druckentlastungssystems sind und keine externe Energieversorgung erfordern. Dadurch wird dem Kühlmittelverlust bereits von Beginn der Druckentlastung an entgegengewirkt und durch das Einspeisen von kaltem Kühlmittel der Druckentlastungsvorgang beschleunigt. Wegen der Kopplung beider Prozesse ist es auch möglich, die Einspeiserate in Abhängigkeit der Abblasemenge so zu gestalten, daß weder eine Überspeisung noch zu geringe Fördermengen auftreten. Eine separate Regelung kann dadurch entfallen.

Sofern der abströmende Dampf im Reaktorschutzgebäude durch Kühlsysteme wieder kondensiert wird, erlaubt dieses Grundprinzip, auch die Rückförderung des im Kühlmittel gelösten Neutronengiftes (z. B. Borsäure) und stellt damit eine Kopplung dreier elementarer Sicherheitfunktionen (Druckentlastung, Nachwärmeabfuhr und Abschaltung der Kettenreaktion) dar, um Unfallsequenzen auszuschließen, die sich aus einer unkoordinierten Entkopplung von Sicherheitsfunktionen ergeben.

Durch den hohen Dichteunterschied von Flüssigkeit zu Dampf und wegen der hohen Enthalpie des Dampfes ist die Rückförderung von flüssigem Kühlmittel zum Ersatz des Kühlmittelverlustes auch bei einem zum Containment hin öffnenden System energetisch auf jedem Druckniveaus stets möglich. Darüber hinaus sind aber auch in geschlossenen Systemen, welche den Dampf kondensieren, der Dampfnutzung (z. B. Turbine) nachgeschaltete Kühler oder die Nutzung vorhandener Kondensatoren der Turbogeneratorgruppen vorgesehen. Dagegen ist bei einem offenen System vorgesehen, daß die Kondensation des Dampfes durch Gebäudekühler im Containment und eine Ansaugung von Kühlwasser aus dem Containmentsumpf oder aus vorhandenen Vorratsbecken erfolgt, welche durch das Kondensat der Gebäudekühler nachgefüllt werden.

Die beschriebenen Systeme lassen sich sowohl für bestehende als auch für zukünftige Kernkraftwerke einsetzen und erhöhen durch ihre Energieautonomie das Sicherheitsniveau und die Zuverlässigkeit elementarer Sicherheitsfunktionen auch bei vollständigem Ausfall der Stromversorgung, sofern sie nicht darüber hinaus durch ebenfalls durch die Druckentlastung angetriebene Zusatzagregate zur Notstromversorgung weiterer Sicherheitssysteme herangezogen werden oder umgekehrt auch einen elektrischen Antrieb oder separate Dampfzuführung erhalten, sofern dies die passive Wirkungsweise nicht einschränkt. Die Umwandlung des Energiegehaltes des bei Störfällen vorhandenen Dampfes in mechanische Energie macht die vorgeschlagenen Systeme unabhängiger von den ansonsten nur genutzten geringen Antriebskräften wie Naturkonvektion, Dichte- oder Niveauunterschiede etc. und den damit verbundenen Fehlerquellen. Die Kopplung passiver Sicherheitsfunktionen erlauben darüber hinaus koordinierte Gegenmaßnahmen und schränken die Möglichkeiten für Fehlfunktionen weiter ein. In Bezug auf den Kühlmittelverlust stellt die vorgeschlagene Strategie einen Kompromiß zwischen vollständig geschlossenem oder abblasendem Primärkreislauf dar und kann damit wegen deutlich geringerer Abblaserate bei effektiver Druckabsenkung auch höhere Akzeptanz finden.

Weitere Merkmale der Erfindung sind in den Unteransprüchen 2 bis 11 angegeben.

Erfindungsgemäß kann die zuvor beschriebene Vorrichtung für einen Druckbehälter eines Kernreaktors verwendet werden. Jedoch ist die Verwendung der Vorrichtung nicht darauf beschränkt, sondern sie kann bspw. auch für beliebige Druckbehälter einer chemischen Herstellungsanlage verwendet werden.

Weitere Merkmale und Vorteile der vorliegenden Erfindung werden im folgenden anhand von Ausführungsbeispielen näher erläutert, wobei auf die beigefügte Zeichnung Bezug genommen wird. In der Zeichnung zeigen
- Fig. 1: ein erstes Ausführungsbeispiel der vorliegenden Erfindung in einer schematischen Darstellung
- Fig. 2: ein zweites Ausführungsbeispiel der vorliegenden Erfindung in einer schematischen Darstellung,
- Fig. 3: ein drittes Ausführungsbeispiel der vorliegenden Erfindung in einer schematischen Darstellung und
- Fig. 4: ein viertes Ausführungsbeispiel der vorliegenden Erfindung in einer schematischen Darstellung.

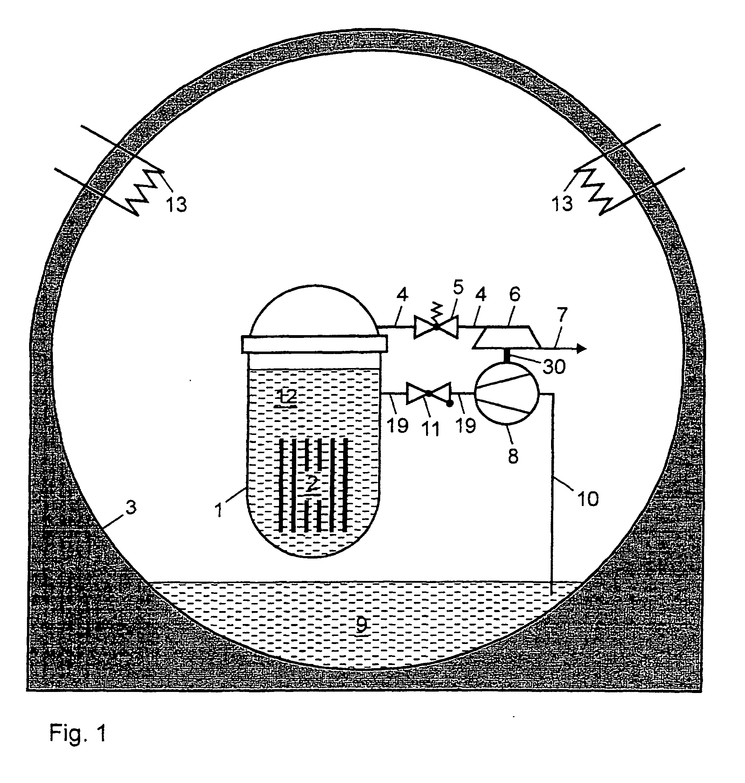

Fig. 1 zeigt einen Reaktordruckbehälter 1 von Druck- oder Siedewasserreaktoren unter Vernachlässigung weiterer Komponeten des Primärkreislaufes mit dem Nachwärme produzierenden Reaktorkern 2 in einem Reaktorschutzgebäude 3. Das Druckentlastungssystem ist zwecks Vereinfachung des dargestellten Funktionsschemas unmittelbar mit dem Reaktordruckbehälter verbunden und führt über eine Leitung 4 zum Druckentlastungsventil 5, welches passiv bzw. über Berstmembranen ausgelöst werden kann. Am Austritt des Druckentlastungsventils 5 ist eine Turbine 6 dargestellt, welche über eine Welle 30 eine Pumpe 8 antreibt, die einen möglichst breiten Druckbereich abdeckt. Hinter der Turbine 6 tritt der Dampf über eine Leitung 7 in die Containmentatmosphäre oder in spezielle Kondensationskammern (nicht dargestellt) ein. Die von der Turbine 6 angetriebene Pumpe 8 entnimmt das Kühlmittel, das vorliegend Kühlwasser ist, dem Gebäudesumpf 9 über die Ansaugleitung 10 und führt es dem Reaktordruckbehälter 1 über das Rückschlagventil 11 nebst zugehöriger Rücklaufleitung 19 wieder zu. Das Kühlwasser vermischt sich mit dem übrigen Kühlmittel 12, das vorzugsweise ebenfalls Wasser ist, im Reaktordruckbehälter 1 und senkt die Temperatur des Kühlmittels 12 dadurch ab. Dadurch wird der Druck im Reaktordruckbehälter 1 - der Dampfdruckkurve folgend - abgesenkt, ohne daß sich das Kühlmittelniveau unzulässig absenkt und ohne daß eine Kernschmelze mit den denkbaren Folgeschäden z. B. durch Dampfexplosion oder Hochdruckversagen des Reaktordruckbehälters 1 auftreten kann. Das Wasser des Gebäudesumpfes 9 wird durch den Gebäudekühler 13 durch Kondensation des Dampfes aus der Containmentatmosphäre ergänzt.

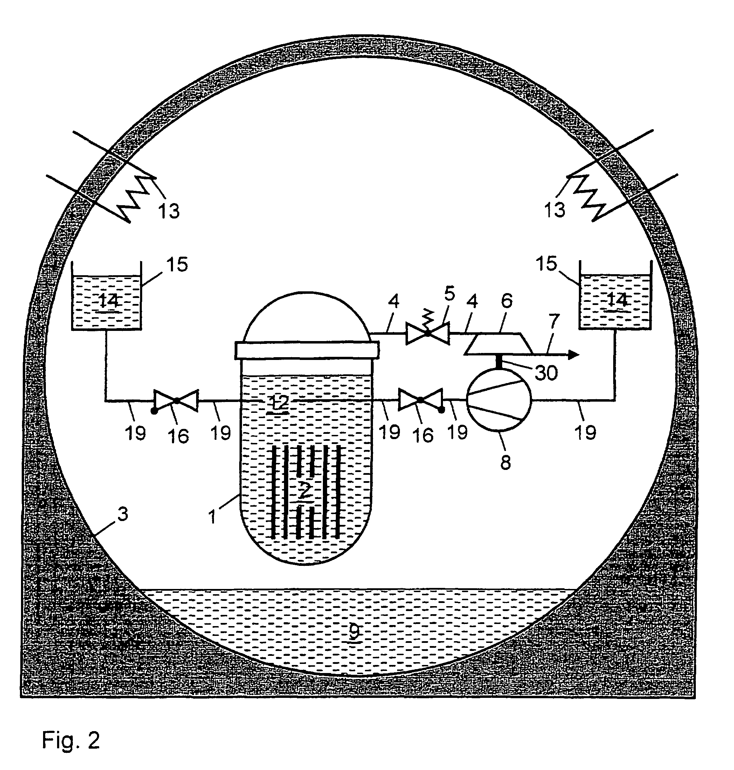

In Fig. 2 ist auf der linken Seite ergänzend noch ein Notkühlsystem mit geodätischer Einspeisung dargestellt. Es weist einen höhergelegten Wasservorrat 14 in einem Behälter 15 auf, der durch Gebäudekühler 13 nachgespeist wird. Ohne weitere Maßnahmen würde dieses Notkühlsystem erst dann über ein Rückschlagventil 16 den Wasservorrat 14 einspeisen können, wenn der Druck im Druckbehälter 1 von der Wassersäule im Notkühlsystem überwunden wird. Dieses Notkühlsystem wird daher erst nach nahezu vollständiger Druckentlastung wirksam, sofern die weitere Verdampfung aufgrund der Nachwärmeproduktion nicht einen Gegendruck bewirkt, der ein Eintreten von Kühlwasser auf niedrigem Druckniveau behindert oder zu oszillierenden Vorgängen führt. Die oben beschriebene erfindungsgemäße Vorrichtung läßt sich nun vorteilhaft auch so einsetzen, daß die Pumpe 8 in einer Verbindungsleitung 19 zwischen dem Vorratsbehälter 15 und dem Rückschlagventil 16 angeordnet ist. Eine Kühlung des Reaktorkerns 2 ist dann bereits mit Beginn der Druckentlastung gegeben, welche sich zeitlich durch das eingespeiste Kühlmittel - gegenüber dem alleinigen Ausdampfen - erheblich verkürzt.

Grundsätzlich lassen sich statt der betriebenen Turbinenstufe 6 und des Pumpensystems 8 auch Kolbenmaschinen für den Antrieb und die Pumpe einsetzen.

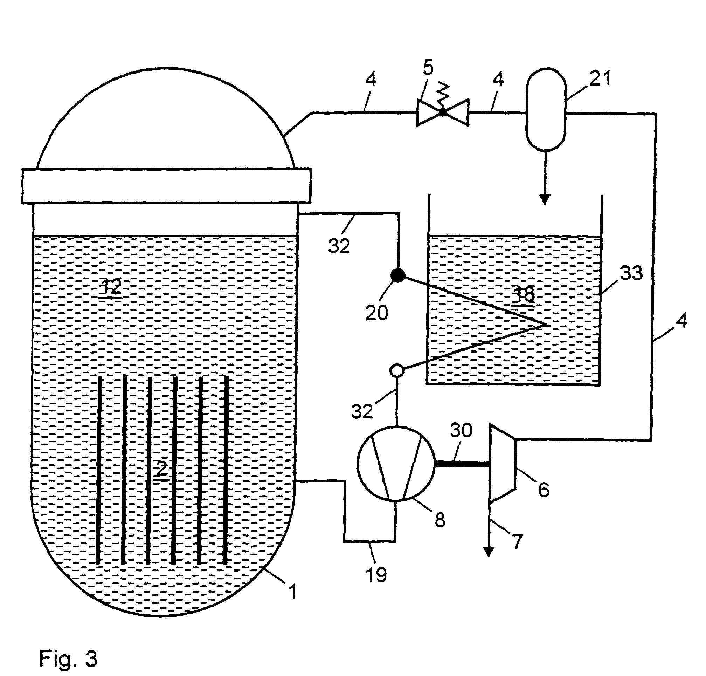

Nach Fig. 3 kann ein derartiger Pumpenantrieb 6 und 8, der seine Energie aus dem ohnehin vorhandenen Dampf bezieht, alternativ auch zur Unterstützung eines passiv arbeitenden Notkondensators 18 dienen, wobei Kühlmitteldampf aus dem Reaktordruckbehälter 1 über Leitungen 32 einem Kühlmittelbehälter 33 und weiter der Pumpe 8 zugeleitet wird. Notkondensatoren werden bislang nur in Naturzirkulation und durch geringe Niveauunterschiede kommunizierender Systeme betrieben. Mit dem Einsatz der Pumpe 8 wird der Durchsatz und die Effektivität erheblich gesteigert. Dadurch kann dem Problem der Blockierung des Notkondensators durch nicht-kondensierbare Gase oder durch Ablagerungen in den Rücklaufleitungen begegnet werden. Die Pumpe 8 ist aus Sicherheitsgründen so auszulegen, daß auch im Stillstand ein hinreichender Durchsatz erfolgt, um die Naturkonvektionsphänomene in der Rücklaufleitung 19 nicht nachteilig zu behindern. Die Wärmeabfuhr über den Notkondensator beginnt dann bereits im gefluteten Zustand durch Umwälzung des Kühlwassers und nicht erst bei abgesenktem Füllstand mit freigelegten Kondensationsrohren.

Darüber hinaus kann die Pumpe 8 auch zusätzlich mit einem Elektroantrieb versehen werden, solange dieser die oben beschriebene passive Funktionsweise nicht stört. Damit kann zusätzlicher Nutzen aus der Kühlwirkung der Notkondensatoren gezogen werden, wenn eine Temperatur- und Druckabsenkung bereits ohne Abblasen oder bei offenem Kühlkreislauf (z. B. bei Brennelementwechsel) erwünscht ist. Die Pumpe 8 oder ein zusätzliches Aggregat können aber auch dazu verwendet werden, diese störende Gasansammlung am Eintritt zum Notkondensator abzusaugen, wenn die Entnahmestelle in der Nähe der aktiven Kühlflächen (z. B. im Sammler 20 des Notkondensators) liegen. In diesem, aber auch in anderen Fällen kann ein Dampftrockner bzw. Tropfenabscheider 21 vor Eintritt in die Turbinenstufe 6 angeordnet werden.

Das hier beschriebene System ist grundsätzlich nicht nur im Primärkreislauf sondern sinngemäß auch für den Feed & Bleed - Betrieb des Sekundärkreislaufes einsetzbar. Darüber hinaus läßt es sich für vorgegebene Druckbereiche optimieren und auch erst in diesen Druckbereichen aktivieren, wenn es z. B. für die Notkühlung von Kernauffangvorrichtungen im Reaktordruckbehälter bei niedrigen Betriebsdrücken Verwendung finden soll. Auch die Kombination derartiger bezüglich des Arbeitsdrucks gestufter Pumpen ist möglich.

Statt Turbo- und Kolbenantrieben sind ab mittleren Drücken auch Dampfstrahlpumpen verwendbar. Das Fehlen mechanisch bewegter Teile ist dabei ein besonderer Vorteil. Zur Vermeidung von Blockaden rotierender Teile ist dagegen ein Einsatz berührungsloser Magnetlager (z. B. mit Permanentmagneten) möglich.

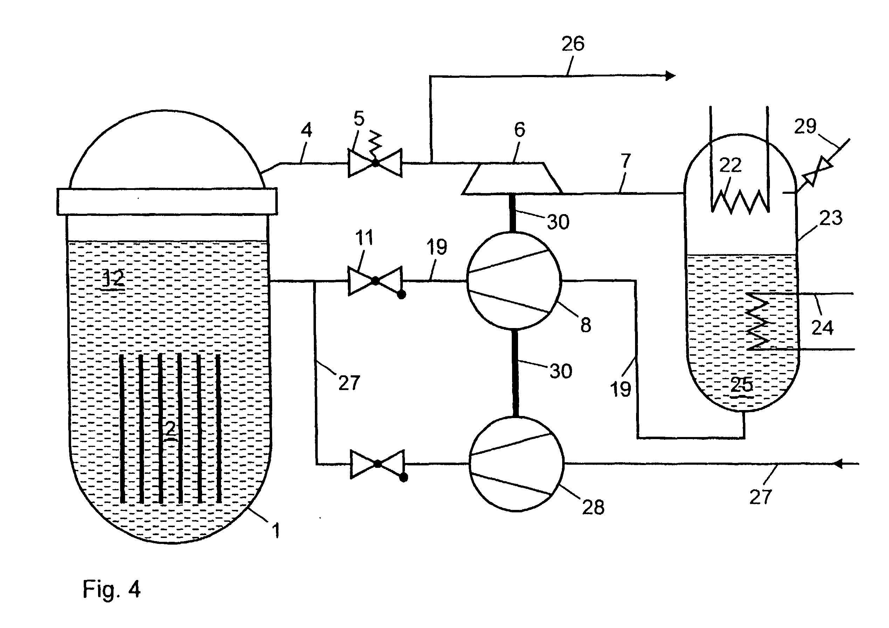

In einem in Fig. 4 dargestellten geschlossenen System wird der kondensierte Dampf über einen Kondensator 22 in einem Druckbehälter 23 niedergeschlagen, der bei Bedarf noch weitere Kühlsysteme 24 für die Kühlung des Kondensats 25 enthält. Der Umlauf des Kühlmittels wird dann ebenfalls ohne Fremdenergie aufgrund der Pumpe 8 über die Leitung 19 und das Rückschlagventil 11 effektiv aufrecht erhalten. Statt separater Einrichtungen für das geschlossene Druckentlastungssystem lassen sich auch ohnehin vorhandene Dampferzeuger zur Abfuhr der Wärme nutzen. Ein Teilstrom des Dampfes wird dann über die Leitung 26 einer externen Wärmesenke zugeführt, während das Kondensat über eine Leitung 27 einer ebenfalls mit der Turbine 6 gekoppelten Pumpe 28 über ein Rückschlagventil 34 wieder in den Reaktordruckbehälter 1 eingespeist wird. Die Dimensionierung des Teilsystems (8, 22-25) nach Fig. 4 beschränkt sich dann allein auf die Antriebsleistung der Pumpe 8 und nicht auf die komplette Nachwärmeabfuhr und die angestrebte Druckentlastung des gesamten Druckbehältersystems.

Geschlossene Systeme können durch größere Mengen nicht kondensierbarer Gase blockiert werden. Daher kann ein Abblasen oder zumindest ein partitielles Abblasen an den kritischen Stellen des geschlossenen Systems mit einer Abblasevorrichtung 29 in das Containment vorgesehen sein, um Probleme mit nicht-kondensierbaren Gasen im Kühlkreislauf zu vermeiden, sofern nicht andere Methoden zur Umwandlung oder Adsorption nicht kondensierbarer Gase Verwendung finden.

## Patentansprüche

1. Vorrichtung zum Druckentlasten und zum passiven Nachspeisen von Kühlmittel in einen Druckbehälter (1),
- mit einem über eine Leitung (4) mit dem Druckbehälter (1) verbundenen Antrieb (6),
- mit einem zwischen dem Druckbehälter (1) und dem Antrieb (6) angeordneten Druckentlastungsventil (5),
- mit einer mit dem Antrieb (6) verbundenen Pumpe (8) und
- mit mindestens einem mit dem Druckbehälter (1) über eine Leitung (19) verbundenes Kühlmittelreservoir (9,14,18,23),
- wobei die Pumpe (8) in der Leitung (19) zwischen dem mindestens einen Kühlmittelreservoir (9,14,18,23) und dem Druckbehälter (1) angeordnet ist
**dadurch gekennzeichnet,**
- **daß** das Druckentlastungsventil (5) als passiv auslösendes Ventil ausgebildet ist.

2. Vorrichtung nach Anspruch 1, **dadurch gekennzeichnet, daß** das Druckentlastungsventil als Berstmembran ausgebildet ist.

3. Vorrichtung nach Anspruch 1 oder 2, **dadurch gekennzeichnet, daß** ein zwischen der Pumpe (8) und dem Druckbehälter (1) angeordnetes Rückschlagventil (11) vorgesehen ist.

4. Vorrichtung nach einem der Ansprüche 1 bis 3, **dadurch gekennzeichnet, daß** der Antrieb und die Pumpe als Dampfstrahlpumpe ausgebildet sind.

5. Vorrichtung nach einem der Ansprüche 1 bis 3, **dadurch gekennzeichnet, daß** der Antrieb und die Pumpe als Kolbenmaschine ausgebildet sind.

6. Vorrichtung nach einem der Ansprüche 1 bis 3, **dadurch gekennzeichnet, daß** der Antrieb als Turbine (6) ausgebildet ist, wobei die Turbine (6) über eine Welle (30) mit der Pumpe (8) verbunden ist.

7. Vorrichtung nach Anspruch 6, **dadurch gekennzeichnet, daß** die Pumpe (8) einen das Antreiben der Pumpe (8) durch den Antrieb (6) nicht beeinträchtigenden zusätzlichen elektromotorischen oder pneumatischen Antrieb aufweist.

8. Vorrichtung nach einem der Ansprüche 1 bis 7, **dadurch gekennzeichnet, daß** die Pumpe (8) einen für eine Naturzirkulation ausreichenden freien Querschnitt aufweist.

9. Vorrichtung nach einem der Ansprüche 1 bis 8, **dadurch gekennzeichnet, daß** ein Dampftrockner oder Tropfenabscheider (21) in der Leitung (4) vor dem Antrieb (6) angeordnet ist

10. Vorrichtung nach einem der Ansprüche 1 bis 9, **dadurch gekennzeichnet, daß** das mindestens eine Külmittelreservoir als Gebäudesumpf (9), als Kühlmittelvorrat (14), als Kondensator (18) oder als Druckbehälter (23) ausgebildet ist.

11. Vorrichtung nach einem der Ansprüche 1 bis 10, **dadurch gekennzeichnet, daß** im dem geschlossenen, Leitungen, Antrieb (6), Pumpe(8) und Kühlmitelreservoir (9,14,18,23) aufweisenden System eine Abblasvorrichtung (29) vorgesehen ist.

12. Verwendung einer Vorrichtung nach einem der Ansprüche 1 bis 11 für den Druckbehälter eines Kernreaktors.

13. Verwendung einer Vorrichtung nach einem der Ansprüche 1 bis 11 für den Druckbehälter einer chemischen Herstellungsanlage.

## Claims

1. A device for depressurizing and for passively feeding coolant to a pressure vessel (1),
- with a drive (6) that is connected to the pressure vessel (1) by means of a line (4),
- with a pressure relief valve (5) that is arranged between the pressure vessel (1) and the drive (6),
- with a pump (8) that is connected to the drive (6), and
- with at least one coolant reservoir (9, 14, 18, 23) that is connected to the pressure vessel (1) by means of a line (19),
- wherein the pump (8) is arranged in the line (19) between the at least one coolant reservoir (9, 14, 18, 23) and the pressure vessel (1),
**characterized in**
- **that** the pressure relief valve (5) is realized in the form of a passively actuated valve.

2. The device according to Claim 1, **characterized in that** the pressure relief valve is realized in the form of a bursting membrane.

3. The device according to Claim 1 or 2, **characterized in that** a check valve (11) is arranged between the pump (8) and the pressure vessel (1).

4. The device according to one of Claims 1 to 3, **characterized in that** the drive and the pump are realized in the form of a steam jet pump.

5. The device according to one of Claims 1 to 3, **characterized in that** the drive and the pump are realized in the form of a piston engine.

6. The device according to one of Claims 1 to 3, **characterized in that** the drive is realized in the form of a turbine (6), wherein the turbine (6) is connected to the pump (8) by means of a shaft (30).

7. The device according to Claim 6, **characterized in that** the pump (8) contains an additional electromotive or pneumatic drive that does not influence the driving of the pump (8) by the drive (6).

8. The device according to one of Claims 1 to 7, **characterized in that** the pump (8) has a free cross section that suffices for a natural circulation.

9. The device according to one of Claims 1 to 8, **characterized in that** a steam dryer or drift eliminator (21) is arranged in the line (4) upstream of the drive (6).

10. The device according to one of Claims 1 to 9, **characterized in that** the at least one coolant reservoir is realized in the form of a containment sump (9), in the form of a coolant supply (14), in the form of a condenser (18) or in the form of a pressure vessel (23).

11. The device according to one of Claims 1 to 10, **characterized in that** a blowdown device (29) is provided in the closed system comprising lines, the drive (6), the pump (8) and the coolant reservoir (9, 14, 18, 23).

12. The utilization of a device according to one of Claims 1 to 11 for the pressure vessel of a nuclear reactor.

13. The utilization of a device according to one of Claims 1 to 11 for the pressure vessel of a chemical manufacturing plant.

## Revendications

1. Dispositif de décompression et de réalimentation passive en agent de refroidissement dans un réservoir sous pression (1), lequel dispositif comporte
- un entraînement (6) relié via une conduite (4) au réservoir sous pression (1),
- un clapet de décompression (5) placé entre le réservoir sous pression (1) et l'entraînement (6),
- une pompe (8) reliée à l'entraînement (6), et
- au moins un réservoir d'agent de refroidissement (9, 14, 18, 23) relié au réservoir sous pression (1) via une conduite (19),
la pompe (8) étant placée dans la conduite (19) entre l'au moins un réservoir d'agent de refroidissement (9, 14, 18, 23) et le réservoir sous pression (1),
**caractérisé en ce que** le clapet de décompression (5) est conformé en clapet à déclenchement passif.

2. Dispositif selon la revendication 1, **caractérisé en ce que** le clapet de décompression est conformé en membrane d'éclatement.

3. Dispositif selon la revendication 1 ou 2, **caractérisé en ce qu'**il est prévu un clapet de non retour (11) placé entre la pompe (8) et le réservoir sous pression (1).

4. Dispositif selon l'une des revendications 1 à 3, **caractérisé en ce que** l'entraînement et la pompe sont conformés en pompe à jet de vapeur.

5. Dispositif selon l'une des revendications 1 à 3, **caractérisé en ce que** l'entraînement et la pompe sont conformés en machine à piston.

6. Dispositif selon l'une des revendications 1 à 3, **caractérisé en ce que** l'entraînement est conformé en turbine (6), la turbine (6) étant reliée à la pompe (8) via un arbre (30).

7. Dispositif selon la revendication 6, **caractérisé en ce que** la pompe (8) comporte un entraînement pneumatique ou à moteur électrique supplémentaire n'entravant pas l'entraînement de la pompe (8) par l'entraînement (6).

8. Dispositif selon l'une des revendications 1 à 7, **caractérisé en ce que** la pompe (8) a une section libre suffisante pour une circulation naturelle.

9. Dispositif selon l'une des revendications 1 à 8, **caractérisé en ce qu'**un sécheur de vapeur ou un pare-gouttes (21) est placé dans la conduite (4) en amont de l'entraînement (6).

10. Dispositif selon l'une des revendications 1 à 9, **caractérisé en ce que** l'au moins un réservoir de refroidissement est conformé en puisard (9), en réservoir d'agent de refroidissement (14), en condenseur (18) ou en réservoir sous pression (23).

11. Dispositif selon l'une des revendications 1 à 10, **caractérisé en ce qu'**un dispositif de purge (29) est prévu dans le système fermé comportant des conduites, l'entraînement (6), la pompe (8) et des réservoirs d'agent de refroidissement (9, 14, 18, 23).

12. Utilisation d'un dispositif selon l'une des revendications 1 à 11 pour le réservoir sous pression d'un réacteur nucléaire.

13. Dispositif selon l'une des revendications 1 à 11 pour le réservoir sous pression d'une installation de production chimique.
